(19) Europäisches Patentamt
European Patent Office
Office européen des brevets

(11) **EP 1 826 645 A1**

(12) **EUROPÄISCHE PATENTANMELDUNG**

(43) Veröffentlichungstag:
**29.08.2007 Patentblatt 2007/35**

(51) Int Cl.:
*G05B 19/418* (2006.01)          *G06F 17/50* (2006.01)
*G06Q 10/00* (2006.01)

(21) Anmeldenummer: **06003862.7**

(22) Anmeldetag: **25.02.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **MTU Aero Engines GmbH**
**80995 München (DE)**

(72) Erfinder:
• **Müller, Stefan**
**82216 Malching (DE)**
• **Kahnert, Markus**
**82140 Olching (DE)**

(54) **Verfahren zur Generierung von Prozessketten**

(57)     Die Erfindung betrifft ein Verfahren zur Generierung einer Prozesskette, nämlich einer optimalen Fertigungsprozesskette für ein Bauteil, wobei alle zur Verfügung stehenden Fertigungstechnologien erfasst werden, wobei alle für das zu fertigende Bauteil zur Verfügung stehenden Daten erfasst werden, wobei aus den erfassten Daten des zu fertigenden Bauteils und aus den erfassten Fertigungstechnologien mögliche Fertigungsprozessketten für das zu fertigende Bauteil generiert werden, und wobei aus den generierten, möglichen Fertigungsprozessketten eine optimale Fertigungsprozesskette für das Bauteil zumindest auf Basis von monetären Bewertungsdaten und/oder qualitativen Bewertungsdaten ausgewählt wird. Das erfindungsgemäße Verfahren ist dadurch gekennzeichnet, dass a) die zur Verfügung stehenden Fertigungstechnologien derart erfasst werden, dass Kernprozesse und den Kernprozessen vorgelagerte und/oder nachgelagerte Vorfolgerprozesse und/ oder Nachfolgerprozesse erfasst werden, wobei die Zuordnung der Vorfolgerprozesse und/oder der Nachfolgerprozesse zu Kernprozessen als Prozess-Prozess-Korrelation erfolgt; b) die für das zu fertigende Bauteil zur Verfügung stehenden Daten derart hierarchisch erfasst werden, dass für das Bauteil Funktionselemente, die zur Erfüllung der Bauteilfunktion notwendig sind, erfasst werden, und dass weiterhin diese Funktionselemente in Bauteilelemente untergliedert werden, mit Hilfe derer die Funktionselemente konstruktiv realisierbar sind; c) den erfassten Funktionselementen und/oder Bauteilelementen des zu fertigenden Bauteils zur Realisierung der Funktionselemente und/oder Bauteilelemente verwendbare Kernprozesse als Produkt-Prozess-Korrelation zugeordnet werden, wobei durch mehrfache, iterative Wiederholung dieser Zuordnung die möglichen Fertigungsprozessketten für das zu fertigende Bauteil generiert werden.

Fig. 1

EP 1 826 645 A1

**Beschreibung**

Die Erfindung betrifft ein Verfahren zur Generierung einer Prozesskette, nämlich einer optimalen Fertigungsprozesskette für ein Bauteil, nach dem Oberbegriff des Anspruchs 1.

Nach dem Stand der Technik wird bei der Generierung einer Fertigungsprozesskette für ein Bauteil so vorgegangen, dass in einer sogenannten Designphase bzw. einer Produktentwicklungsphase zuerst das konstruktive Design eines Bauteils festgelegt und anschließend in einer Fertigungsplanungsphase bzw. einer Produktionsplanungsphase eine Fertigungsprozesskette für das fertig konstruierte bzw. weitestgehend determinierte Bauteil erstellt wird. Die Produktentwicklungsphase sowie die Produktionsplanungsphase sind dabei voneinander getrennte, sowie sequentiell bzw. hintereinander ablaufende Vorgänge. Durch die Trennung von Produktentwicklungsphase und Produktionsplanungsphase können in der Produktentwicklungsphase unter Umständen konstruktive Designs für ein zu fertigendes Bauteil festgelegt werden, die nicht oder nur mit hohem Kostenaufwand fertigbar sind. Auch werden durch die Trennung von Produktentwicklungsphase und Produktionsplanungsphase Impulse an die Verfahrensentwicklung zu spät gegeben, so dass neue Fertigungsverfahren bzw. Bearbeitungsverfahren, die zur Fertigung des Bauteils Verbesserungspotentiale bieten, häufig nicht rechtzeitig zur Verfügung stehen oder in Überlegungen im Rahmen der Produktionsplanung nicht einbezogen werden.

In der Fertigungsplanungsphase bzw. Produktionsplanungsphase wird nach dem Stand der Technik so vorgegangen, dass für die Fertigung eines Bauteils eine Fertigungsprozesskette aus mehreren hintereinander ablaufenden Prozessschritten, nämlich Fertigungsschritten sowie Bearbeitungsschritten, festgelegt wird, wobei für jeden einzelnen Fertigungsschritt sowie Bearbeitungsschritt und demnach Prozessschritt eine Optimierung angestrebt wird. Dabei wird davon ausgegangen, dass eine Aneinanderreihung der für sich optimierten, einzelnen Fertigungsschritte und Bearbeitungsschritte zu einer insgesamt optimalen Fertigungsprozesskette für das Bauteil führt. Diese Vorgehensweise verfügt über den Nachteil, dass durch die Aneinanderreihung von für sich isoliert optimierten Fertigungsschritten sowie Bearbeitungsschritten zu einer Fertigungsprozesskette für ein Bauteil keine gesamtheitliche Betrachtung möglich ist. Insofern kann auch nicht sichergestellt werden, dass eine optimale Fertigungsprozesskette für ein zu fertigendes Bauteil gefunden wird.

Weiterhin wird in der Produktionsplanungsphase nach dem Stand der Technik so vorgegangen, dass zur Generierung einer Fertigungsprozesskette für ein neu konstruiertes Bauteil auf bereits bestehende Fertigungsprozessketten ähnlicher älterer Bauteile zurückgegriffen wird, wobei dabei im Sinne einer Copy&Paste-Vorgehensweise aus bestehenden Fertigungsprozessketten älterer Bauteile eine neue Fertigungsprozesskette für das neu konstruierte Bauteil abgeleitet wird. Nach dieser weit verbreiteten Vorgehensweise werden demnach bestehende, ähnliche Fertigungsprozessketten kopiert und an das neu konstruierte Bauteil iterativ angepasst. Daraus folgt zwangsläufig, dass mögliche Fertigungsalternativen bei der Generierung von Fertigungsprozessketten nicht konsequent berücksichtigt werden.

Hiervon ausgehend liegt der vorliegenden Erfindung das Problem zu Grunde, ein neuartiges Verfahren zur Generierung einer Prozesskette, nämlich einer Fertigungsprozesskette für ein Bauteil, zu schaffen. Dieses Problem wird durch ein Verfahren gemäß Patentanspruch 1 gelöst.

Das erfindungsgemäße Verfahren ist dadurch gekennzeichnet, dass a) die zur Verfügung stehenden Fertigungstechnologien derart erfasst werden, dass Kernprozesse und den Kernprozessen vorgelagerte und/oder nachgelagerte Vorfolgerprozesse und/oder Nachfolgerprozesse erfasst werden, wobei die Zuordnung der Vorfolgerprozesse und/oder der Nachfolgerprozesse zu Kernprozessen als Prozess-Prozess-Korrelation erfolgt; b) die für das zu fertigende Bauteil zur Verfügung stehenden Daten derart hierarchisch erfasst werden, dass für das Bauteil Funktionselemente, die zur Erfüllung der Bauteilfunktion notwendig sind, erfasst werden, und dass weiterhin diese Funktionselemente in Bauteilelemente untergliedert werden, mit Hilfe derer die Funktionselemente konstruktiv realisierbar sind; c) den Funktionselementen und/oder Bauteilelementen des zu fertigenden Bauteils zur Realisierung der Funktionselemente und/oder Bauteilelemente verwendbare Kernprozesse als Produkt-Prozess-Korrelation zugeordnet werden, wobei durch mehrfache, iterative Wiederholung dieser Zuordnung die möglichen Fertigungsprozessketten für das zu fertigende Bauteil generiert werden.

Mit dem erfindungsgemäßen Verfahren wird eine klar definierte, standardisierte und automatisierte Vorgehensweise zur Generierung von Prozessketten vorgeschlagen, mit welcher alle zur Verfügung stehenden Fertigungsalternativen bei der Generierung von Fertigungsprozessketten berücksichtigt werden können.

Das erfindungsgemäße Verfahren erlaubt eine starke Verzahnung von Produktentwicklungsphase sowie Produktionsplanungsphase, so dass die sich nach dem Stand der Technik üblichen, aus der Trennung von Produktentwicklungsphase und Produktionsplanungsphase resultierenden Nachteile, vermieden werden können.

Vorzugsweise werden weiterhin alle zur Verfügung stehenden Werkstoffe bzw. Materialen erfasst, wobei den erfassten Funktionselementen und/oder Bauteilelementen des zu fertigenden Bauteils zur Realisierung der Funktionselemente und/oder Bauteilelemente verwendbare Werkstoffe als Produkt-Material-Korrelation zugeordnet werden, und wobei den erfassten Kernprozessen mit denselben bearbeitbare Werkstoffe als Prozess-Material-Korrelation zugeordnet werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

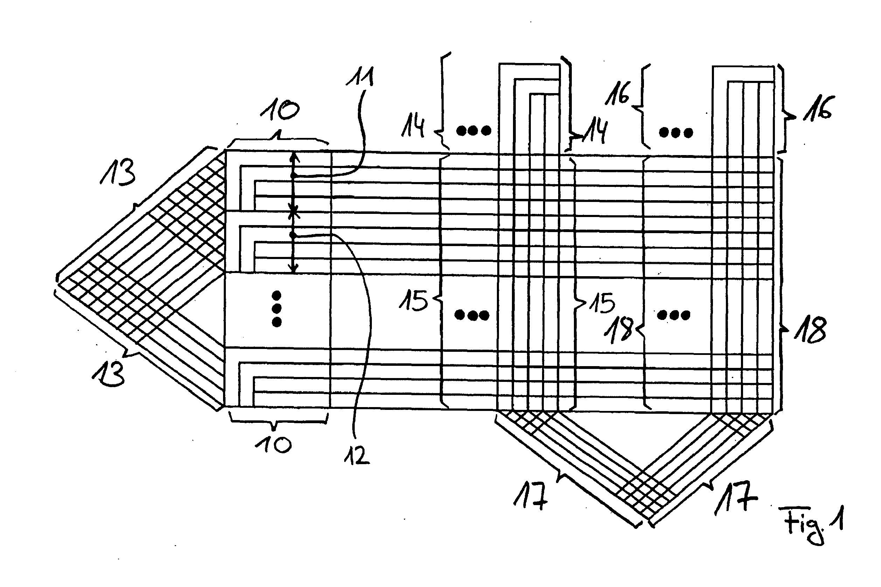

Fig. 1    eine Matrixstruktur zur Erfassung von zur Verfügung stehenden Fertigungstechnologien, von zur Verfügung stehenden Werkstoffen bzw. Materialen und von Daten des zu fertigenden Bauteils.

Die hier vorliegende Erfindung betrifft eine Verfahren zur Generierung einer optimalen Fertigungsprozesskette für ein neu zu entwickelndes Bauteil, wobei in groben Zügen so vorgegangen wird, dass in einem ersten Schritt alle zur Verfügung stehenden Fertigungstechnologien erfasst werden, dass in einem zweiten Schritt alle für das zu fertigende Bauteil zur Verfügung stehende Daten erfasst werden, dass anschließend aus den im ersten Schritte erfassten Fertigungstechnologien und den im zweiten Schritt erfassten Bauteildaten mögliche Fertigungsprozessketten für das zu fertigende Bauteil generiert werden, wobei darauffolgend in einem vierten Schritt aus den möglichen Fertigungsprozessketten eine optimale Fertigungsprozesskette für das zu fertigende Bauteil ausgewählt wird, nämlich zumindest auf Basis von monetären Bewertungsdaten und/oder qualitativen Bewertungsdaten. Die hier vorliegende Erfindung betrifft dabei schwerpunktmäßig die Erfassung der Fertigungstechnologien sowie Bauteildaten sowie die Generierung möglicher Fertigungsprozessketten aus diesen erfassten Größen.

Die Erfassung der zur Verfügung stehenden Fertigungstechnologien, die Erfassung der zur Verfügung stehenden Bauteildaten sowie gegebenenfalls eine Erfassung von zur Verfügung stehenden Werkstoffen bzw. Materialien zur Generierung möglicher Fertigungsprozessketten für ein zu fertigendes Bauteil wird nachfolgend unter Bezugnahme auf Fig. 1 im Detail beschrieben. So zeigt Fig. 1 in einer Darstellung eine Matrixstruktur mit mehreren Korrelationsmatrizen, die zur Generierung möglicher Fertigungsprozessketten für ein zu fertigendes Bauteil von zentraler Bedeutung sind.

So werden, wie bereits oben erwähnt, in einem ersten Schritt alle zur Verfügung stehenden Fertigungstechnologien erfasst, wobei diese Fertigungstechnologien in einem Prozessstrukturbereich 10 der in Fig. 1 dargestellten Matrixstruktur hierarchisch strukturiert und geclustert erfasst werden. Diese hierarchisch strukturierte Erfassung der zur Verfügung stehenden Fertigungstechnologien erfolgt dabei vorzugsweise in Anlehnung an die Norm DIN 8580 sowie deren relevanter Unternormen.

Soll als Fertigungstechnologie das Schleifen in einem Teilbereich 11 des Prozessstrukturbereichs 10 erfasst werden, so wird zur Hierarchisierung der Fertigungstechnologie des Schleifens in einer ersten Hierarchisierungsstufe nach der Funktion von Schleifprozessen unterschieden, so z.B. zwischen Schleifprozessen zur Erzeugung von Funktionsflächen oder dem Gleitschleifen. In einer zweiten Hierarchisierungsstufe werden dann mögliche Schleifprozesse erfasst, mit welchen diese Funktion des Schleifens realisiert werden kann, beim Schleifen zur Funktionsflächenerzeugung kann es sich z.B. um CBN-Schleifen oder Korundschleifen handeln. In einer weiteren, dritten Hierarchisierungsstufe können dann diese Schleifprozesse weiter differenziert werden, so z.B. beim CBN-Schleifen zwischen kunststoffgebundenem CBN-Schleifen, galvanisch gebundenem CBN-Schleifen und keramisch gebundenem CBN-Schleifen.

Soll in einem zweiten Teilbereich 12 des Prozessstrukturbereichs 10 als Fertigungstechnologie das Prüfen erfasst werden, so wird in einer ersten Hierarchisierungsstufe wiederum nach der Funktion des Prüfens unterschieden, so z.B. zwischen Rissprüfung, Schichtdickenprüfung, Rauheitsprüfung oder Luftdurchlassprüfung. In einer zweiten Hierarchisierungsstufe kann dann zwischen Prüfprozessen differenziert werden, mit welchen diese Prüffunktionen realisiert werden können, bei der Rissprüfung z.B. zwischen Röntgenprüfung und Ultraschallprüfung.

Bei dieser Erfassung der Fertigungstechnologien werden Kernprozesse definiert, wobei Kernprozesse solche Fertigungsprozesse sind, die eine maßgebliche Wertschöpfungsstufe mit sich bringen. Diesen Kernprozessen werden in einer Prozess-Prozess-Korrelationsmatrix 13 der in Fig. 1 gezeigten Matrixstruktur vorgelagerte und/oder nachgelagerte Vorfolgerprozesse und/oder Nachfolgerprozesse zugeordnet, wobei typische Vorgängerprozesse z.B. Zuordnungsprozesse, Reinigungsprozesse und Vorbereitungsprozesse sind, und wobei typische Nachfolgerprozesse z.B. Prüfprozesse, Entgradprozesse und Verrundungsprozesse sind.

Dabei wird nicht nur erfasst, welchem der Kernprozesse welche Vorgängerprozesse sowie Nachfolgerprozesse zuzuordnen sind, weiterhin wird die Vorgängerposition und/oder die Nachfolgerposition von Vorfolgerprozessen und/oder Nachfolgerprozessen in Bezug auf die Kernprozesse erfasst. Dies erfolgt vorzugsweise durch Verwendung alphanumerischer Codes.

Die Zuordnung von Vorfolgerprozessen und Nachfolgerprozessen zu Kernprozessen in der Prozess-Prozess-Korrelationsmatrix erfolgt dabei vorzugsweise unter Verwendung von Korrelationskennwerten, wobei hier als Korrelationskennwerte vorzugsweise Muss-Beziehungen, Zumeist-Beziehungen, Kann-Beziehungen sowie Selten-Beziehungen verwendet werden. Hierdurch lässt sich der Grad der Notwendigkeit eines Vorfolgerprozesses sowie Nachfolgerprozesses in Bezug auf einen Kernprozess erfassen.

Bei der Erfassung der zur Verfügung stehenden Fertigungstechnologien werden weiterhin Prozessparameter zur quantitativen und/oder qualitativen und/oder monetären Bewertung zumindest der Kernprozesse erfasst, wobei es sich bei solchen Prozessparametern abhängig von der Fertigungstechnologie bzw. abhängig vom Kernprozess z.B. um durchschnittliche, minimale und maximale maschinelle Prozesszeiten, durchschnittliche, minimale und maximale manuelle Prozesszeiten, durchschnittliche, minimale und maximale Rüstzeiten, durchschnittliche, minimale und maximale Maschinenstundensätze, durchschnittliche, minimale und maximale Lohnstundensätze, Sonderbetriebsmittelkosten und Arbeitsvorbereitungskosten handeln kann.

Die jeweiligen gemittelten, maximalen und minimalen Zeiten werden vorzugsweise in Abhängigkeit von der Fertigungstechnologie bzw. Prozessart sowie von den bearbeiteten Bauteilelementen ermittelt auf Basis von Arbeitsplandatenbanken ermittelt. Auf Grundlage von Datenanalysen werden vorzugsweise Regeln definiert, für welchen Anwendungsfall auf welche Teilmenge des Datenbestands zugegriffen wird.

Für existierende Fertigungstechnologien werden die jeweiligen gemittelten, maximalen und minimalen Zeiten im Sinne einer reifenden Bewertung aktualisiert, insofern für dieselben parametrische Zeitfunktionen zur Verfügung stehen. Für den Fall, dass neue Fertigungstechnologien zu integrieren sind, werden die jeweiligen Zeiten geschätzt bzw. auf Basis geschätzter Parameter errechnet.

Weiterhin können in diesem Zusammenhang zumindest den Kernprozessen der einzelnen Fertigungstechnologien Risikowerte zugeordnet werden, wobei die Risikowerte vom jeweiligen Entwicklungsstadium eines Kernprozesses bzw. Fertigungsprozesses bzw. Bearbeitungsverfahrens abhängig sind. Dabei kann auf folgende Tabelle zurückgegriffen werden:

| Technologiereifegrads | Risikowert |
|---|---|
| Serienreife | 0 % |
| Übergangsphase | 3 % |
| Erprobungsphase | 5 % |
| Auslegungsphase | 8 % |
| Konzeptphase | 13 % |
| Definitionsphase | 18 % |
| Vorphase | 20 % |

Handelt es sich demnach zum Beispiel um einen serienreifen Kernprozess, so beträgt der Risikowert 0 %. Liegt der Kernprozess jedoch erst in der Konzeptphase vor, so beträgt der Risikowert zum Beispiel 13 %. Befindet sich der Kernprozess bereits in der Erprobungsphase, so kann diesem ein Risikowert von zum Beispiel 5 % zugeordnet werden.

Zusätzlich zu der Bewertung des Technologiereifegrads bei der Ermittlung der Risikowerte kann des Weiteren berücksichtigt werden, ob es sich um betriebsintern verfügbare Kernprozesse oder um extern zuzukaufende Kernprozesse handelt. Abhängig hiervon, können die auf Basis des Technologiereifegrads ermittelten Risikowerte mit einem Risikozuschlagswert versehen werden. Dabei kann folgende Tabelle verwendet werden.

| Technologieverfügbarkeit | Risikozuschlagswert |
|---|---|
| Betriebsintern | 0 % |
| Kooperationspartner | 5 % |
| Fremdfirma | 10 % |

Bei betriebsinternen verfügbaren Kernprozessen beträgt der Risikozuschlagswert 0 %. Handelt es sich um zuzukaufende Fremdtechnologien, so kann zum Beispiel ein Risikozuschlagswert von 10 % auf den auf Basis des Technologiereifegrads ermittelten Risikowert addiert werden. Handelt es sich um Kernprozesse von Kooperationspartnern, so kann ein Risikozuschlagswert von 5 % auf den auf Basis des Technologiereifegrads ermittelten Risikowert zugeschlagen werden.

Weiterhin können in diesem Zusammenhang den Prozessparametern, insbesondere den Kostenparametern, Schärfewerte zugeordnet werden, die auch als "Level of Confidence" bzw. LOC bezeichnet werden. Hierbei kann auf Folgende Tabelle zurückgegriffen werden:

| Datentyp | Schärfewert/LOC |
|---|---|
| validierte Daten | 100 % |

(fortgesetzt)

| Datentyp | Schärfewert/LOC |
|---|---|
| Kalkulierte Daten, Erfahrung ja | 95 % |
| Schätzwert, Erfahrung ja | 93 % |
| kalkulierte Daten, Erfahrung nein | 90 % |
| Schätzwert, Erfahrung nein | 85 % |

Auf Basis validierter Daten ermittelten Prozessparametern wird dann ein Schärfewert von 100 % zugeordnet. Auf Basis von erfahrungsbasierten Schätzwertedaten ermittelten Prozessparameter wird ein Schärfewert von zum Beispiel 93 % zugeordnet, wohingegen auf Basis erfahrungsloser Schätzwertedaten ermittelten Prozessparametern ein Schärfewert von zum Beispiel 85 % zugeordnet wird.

Neben den Fertigungstechnologien sowie Prozessparametern derselben werden im Sinne der hier vorliegenden Erfindung weiterhin die zur Verfügung stehenden Daten des zu fertigenden Bauteils erfasst, und zwar in einem Produktstrukturbereich 14 der Matrixstruktur gemäß Fig. 1. Die Erfassung der zur Verfügung stehenden Daten für das zu fertigende Bauteil erfolgt dabei wiederum hierarchisch strukturiert, und zwar derart, dass für ein Bauteil in einer ersten Hierarchisierungsstufe Funktionselemente erfasst werden, die zur Erfüllung einer Bauteilfunktion erforderlich sind, und dass in einer zweiten Hierarchisierungsstufe diese Funktionselemente in Bauteilelemente untergliedert werden, mit Hilfe derer die Funktionselemente konstruktiv realisierbar sind. In einer dritten Hierarchisierungsstufe können diese Bauteilelemente weiterhin in Bauteilsubelemente untergliedert werden.

Handelt es sich bei dem zu fertigenden Bauteil um eine Laufschaufel eines Hochdruckverdichters einer Gasturbine, so können als Funktionselemente z.B. eine Aerofunktion, Dichtfunktion, Kühlfunktion und Radialsicherung für die Laufschaufel erfasst werden. Das Funktionselement Aerofunktion wird dann in die Bauteilelemente Schaufelblatt und Ringraumkontur untergliedert. Das Funktionselement Dichtfunktion wird in Outer Air Seal und Inner Air Seal untergliedert. Das Funktionselement Kühlfunktion kann in Kühlluftbohrungen und Kühlluftschlitze untergliedert werden. Dem Funktionselement der Radialsicherung kann als Bauteilelement das Schaufelfußprofil zugeordnet werden, welches in die Bauteilsubelemente saugseitiges und druckseitiges Tannenbaumprofil, saugseitiges und druckseitiges Schwalbenschwanzprofil, Schaufelfußeintrittskante sowie Schaufelfußaustrittskante untergliedert werden kann.

Bei der Erfassung der Bauteildaten werden demnach Funktionselemente definiert, wobei die Funktionselemente in Bauteilelemente und die Bauteilelemente gegebenenfalls in Bauteilsubelemente untergliedert werden.

Die obige Erfassung der zur Verfügung stehenden Fertigungstechnologien sowie der zur Verfügung stehenden Daten des zu fertigenden Bauteils erfolgt dabei im Sinne eines Wissensmanagements allgemein für eine Bauteilklasse des zu fertigenden Bauteils. Diese strukturierte Datenerfassung stellt eine notwendige Vorbereitung dar, um anschließend aus den für die Bauteilklasse erfassten Daten mögliche Fertigungsprozessketten für das konkrete Bauteil zu ermitteln. Einmal für eine Bauteilklasse erfasste Daten können demnach für unterschiedliche Bauteile genutzt werden.

Nach der Erfassung der zur Verfügung stehenden Fertigungstechnologien sowie der zur Verfügung stehenden Bauteildaten werden dann im Sinne der hier vorliegenden Erfindung den Funktionselementen und/oder den Bauteilelementen und/oder den Bauteilsubelementen des konkreten, zu fertigenden Bauteils Kernprozesse in einer Produkt-Prozess-Korrelationsmatrix 15 der Matrixstruktur gemäß Fig. 1 zugeordnet.

Die Zuordnung von Kernprozessen zu den Funktionselementen und/oder den Bauteilelementen und/oder den Bauteilsubelementen erfolgt dabei wiederum unter Verwendung von Korrelationskennwerten wie Muss-Beziehungen, Kann-Beziehungen sowie Selten-Beziehungen. Bei dieser Zuordnung in der Produkt-Prozess-Korrelationsmatrix 15 ist darauf zu achten, dass einerseits aktuell praktizierte Vorgehensweisen erfasst werden, aber auch optional und in der Entwicklung befindliche Optionen berücksichtigt werden.

Durch die Zuordnung von Kerntechnologien zu Funktionselementen und/oder Bauteilelementen und/oder Bauteilsubelementen werden mögliche Fertigungsprozessketten für dass zu fertigende Bauteil generiert, wobei durch mehrfache iterative Wiederholung dieser Zuordnung alle möglichen Fertigungsprozessketten für das konkret zu fertigende Bauteil generiert werden können.

Derart generierte Fertigungsprozessketten für ein zu fertigendes Bauteil werden für eine sinnvolle Abfolge der Fertigungsprozessketten sortiert, z.B. sollen alle mechanischen Prozessschritte vor Durchführung von Glühprozessen abgeschlossen sein. Als Ergebnis liegen mögliche Fertigungsprozessketten von Kernprozessen inklusive aller Vorfolgerprozesse und Nachfolgerprozesse der Kernprozesse vor.

Nach einer vorteilhaften Weiterbildung der hier vorliegenden Erfindung werden bei der Generierung möglicher Fertigungsprozessketten gemäß Fig. 1 auch alle zur Verfügung stehenden Werkstoffe bzw. alle zur Verfügung stehenden Materialien in einem Materialstrukturbereich 16 der Matrixstruktur gemäß Fig. 1 erfasst.

Dabei können dann den erfassten Funktionselementen und/oder Bauteilelementen und/oder Bauteilsubelementen des zu fertigenden Bauteils zur Realisierung der Funktionselemente und/oder Bauteilelemente und/oder Bauteilsubelemente verwendbare Werkstoffe in einer Produkt-Material-Korrelationsmatrix 17 zugeordnet werden. Die Zuordnung in der Produkt-Material-Korrelationsmatrix 17 erfolgt wiederum unter Verwendung von Korrelationskennwerten wie Muss-Beziehungen, Zumeist-Beziehungen, Kann-Beziehungen sowie Selten-Beziehungen.

Weiterhin können in einer Prozess-Material-Korrelationsmatrix 18 den erfassten Kernprozessen mit denselben bearbeitbare Werkstoffe zugeordnet werden, und zwar wiederum unter Verwendung von Korrelationskennwerten, wie Gut-Bearbeitbar-Beziehungen sowie Eingeschränkt-Bearbeitbar-Beziehungen.

Da die Werkstoffauswahl ein zu fertigendes Bauteil und die Fertigungstechnologien maßgeblich determiniert, sollten dann, wenn Produkt-Material-Korrelationen und Prozess-Material-Korrelationen erfasst werden, diese am Anfang der erfindungsgemäßen Verfahrens erfasst werden.

Nach der obigen strukturierten Ermittlung der möglichen Fertigungsprozessketten für das zu fertigende Bauteil wird dann im Sinne der Erfindung aus den möglichen Fertigungsprozessketten die optimale Fertigungsprozesskette ausgewählt, und zwar auf Basis von monetären Bewertungsdaten und/oder qualitativen Bewertungsdaten, wobei hierauf auf die im Zusammenhang mit den Fertigungstechnologien bzw. Kernprozessen erfassten Prozessparameter zurückgegriffen wird.

So können aus den im Zusammenhang mit den Kernprozessen erfassten monitären Prozessparametern Stückkosten ermittelt werden, die sich bei Verwendung der generierten, möglichen Fertigungsprozessketten ergeben. Die Stückkosten setzen sich dabei aus den bereits erwähnten maschinellen Prozesszeiten, manuellen Prozesszeiten, Rüstzeiten, Maschinenstundensätzen, Lohnstundensätzen sowie Einmalkosten wie Sonderbetriebsmittelkosten und Arbeitsvorbereitungskosten der einzelnen Kernprozesse einer möglichen Fertigungsprozesskette zusammen.

Weiterhin kann für die möglichen Fertigungsprozessketten das technologische Gesamtrisiko derselben ermittelt werden, welches sich aus den vom Technologiereifegrad abhängigen Risikowerten der Kernprozesse sowie dem von der Technologieverfügbarkeit abhängigen Risikozuschlagswert der Kernprozesse der jeweiligen Fertigungsprozessketten zusammensetzt. Das technologische Gesamtrisiko $R_{GESAMT}$ einer Fertigungsprozesskette kann dabei unter Verwendung der folgenden Formel errechnet werden:

$$R_{GESAMT} = (1-((1-R_{KP-1}) * (1-R_{KP-2}) * \ldots * (1-R_{KP-N}))),$$

wobei $R_{GESAMT}$ das technologische Gesamtrisiko einer Fertigungsprozesskette, $R_{KP-I}$ der Risikowert des Kernprozesses I dieser Fertigungsprozesskette und N die Anzahl der Kernprozesse ist.

Weiterhin können aus den Schärfewerten LOC der Prozessparameter der Kernprozesse Gesamtschärfewerte $LOC_{GESAMT}$ der ermittelten, möglichen Fertigungsprozessketten unter der Verwendung der folgenden Formel ermittelt werden:

$$LOC_{GESAMT} = LOC_{KP-1} * LOC_{KP-2} * \ldots * LOC_{KP-N},$$

wobei $LOC_{GESAMT}$ die Gesamtschärfe einer Fertigungsprozesskette, $LOC_{KP-I}$ der Schärfewert des Kernprozesses I dieser Fertigungsprozesskette und N die Anzahl der Kernprozesse ist.

Weiterhin wird zur Auswahl der optimalen Fertigungsprozesskette aus den generierten, möglichen Fertigungsprozessketten eine Kapitalwertkalkulation für die möglichen Fertigungsprozessketten durchgeführt, wobei mit einer solchen Kapitalwertkalkulation Aspekte wie Investitionen, Maschinenbelegungszeiten, Kapazitätsauslastungen sowie die unterschiedliche Anzahl benötigter Betriebsmittel bewertet werden kann. Bei der Kapitalwertkalkulation wird jede generierte, mögliche Fertigungsprozesskette als eigenständige Investition betrachtet, die durch eingehende und ausgehende Zahlungsströme, sogenannte Einzahlungen und Auszahlungen gekennzeichnet ist.

So wird zum Beispiel der voraussichtliche Umsatz bzw. Verkaufserlös der zu fertigenden Bauteile als Einzahlung behandelt. Notwendige Einmalkosten für Bauteilerprobungen und Stückkosten werden als Auszahlungen behandelt. Einzahlungen und Auszahlungen werden dabei im zeitlichen Ablauf nach Grö-ße, zeitlichem Anfall und Dauer unterschieden, so dass zum Beispiel jährliche Schwankungen infolge sich ändernder Umsätze abgebildet werden können. Bei der Kapitalwertmethode werden demnach zeitliche Faktoren berücksichtigt, da Einzahlungen, die in der Zukunft liegen, weniger wert sind als zeitnahe Einzahlungen, und da Auszahlungen um so belastender sind, je näher der Auszahlungszeitpunkt liegt. Alle Einzahlungen und Auszahlungen werden demnach auf den jeweiligen Zeitpunkt abgezinst, wobei ein auf einen Zeitpunkt abgezinste Einzahlung oder Auszahlung auch als Barwert bezeichnet wird.

Der Kapitalwert einer Fertigungsprozesskette ergibt sich als Differenz zwischen der Summe der Barwerte aller Einzahlungen und der Summe der Barwerte aller Auszahlungen unter Zugrundelegung der folgenden Formel:

$$K = \sum_{t=0}^{n} (E_t - A_t)(1 + i)^{-t} \; ,$$

wobei K der Kapitalwert, $E_t$ eine Einzahlung am Ende der Periode t, $A_t$ eine Auszahlung am Ende der Periode t, i der Kalkulationszinsfuss, und n die Nutzungsdauer eines Investitionsobjekts ist.

Die Abzinsung erfolgt mit einem Kalkulationszinsfuss, welcher der gewünschten Mindestverzinsung entspricht. Dabei wird unterstellt, dass sich Einzahlungen zum Kalkulationszinsfuss verzinsen. Ist der Kapitalwert Null, so wird gerade noch diese Mindestverzinsung erzielt, das heißt die Einzahlungsüberschüsse sind ausreichend, um Anfangsauszahlungen zu tilgen und das investierte Kapital zum Kalkulationszinsfuss zu verzinsen. Dann, wenn der Kapitalwert positiv ist, gibt dieser die Zahlungsüberschüsse des Investitionsobjekts an, die nach Abzug der Anschaffungsauszahlung zur Verfügung stehen und verzinst werden können. Ferner zeigt ein positiver Kapitalwert an, dass eine über dem Kalkulationszinsfuss liegende Verzinsung vorliegt. Bei negativem Kapitalwert gilt Gegenteiliges. Nach der Kapitalwertmethode ist eine Investition um so vorteilhafter, je höher der Kapitalwert ist. Grundsätzlich ist also eine Fertigungsprozesskette um so vorteilhafter, desto höher deren Kapitalwert ausfällt.

Es wird dabei kein absoluter Kapitalwert für die Fertigungsprozessketten ermittelt, vielmehr werden sogenannte Differenzkapitalwerte zu einer Absprungbasis AB ermittelt, die als Vergleichsbasis dient. Hierdurch erspart man sich eine aufwendige Sammlung von Daten hinsichtlich Umsätze, erzielte Verkaufserlöse, Stückkosten und dergleichen. Werden derartige Differenzkapitalwerte in einem Diagramm aufgetragen, so erhält die Absprungbasis den Wert Null. Dies bedeutet jedoch nicht, dass die Absprungsbasis unwirtschaftlich ist. Ein Differenzkapitalwert einer Fertigungsprozesskette ergibt sich unter Zugrundelegung der folgenden Formel:

$$\Delta K = \sum_{t=0}^{n} ((HK_{AB} - HK)_t + (AS - AS_{AB})_t + (AI_{AB} - AI)_t + (EK_{AB} - EK)_t)(1 + i)^{-t} \; ,$$

wobei $\Delta K$ der Differenzkapitalwert, HK Herstellkosten, AS Abschreibungen, AI Anlageninvestments, und EK Einmalkosten sind.

Die optimale Fertigungsprozesskette für ein zu fertigendes Bauteil wird auf Basis der vorgenommenen Kapitalwertkalkulationen sowie auf Basis der ermittelten Risikodaten der Fertigungsprozessketten vorgenommen. Dabei wird vorzugsweise in einem Diagramm der Kapitalwert bzw. Differenzkapitalwert über dem Risikowert aufgetragen, wobei bei vergleichbarem Risikowert die Fertigungsprozesskette ausgewählt wird, die den höchsten Kapitalwert aufweist. Eine Fertigungsprozesskette wird demnach nur dann ausgewählt, wenn keine andere Fertigungsprozesskette mit mindestens gleichem Kapitalwert bei niedrigerem Risiko besteht.

**Patentansprüche**

1. Verfahren zur Generierung einer Prozesskette, nämlich einer optimalen Fertigungsprozesskette für ein Bauteil, wobei alle zur Verfügung stehenden Fertigungstechnologien erfasst werden, wobei alle für das zu fertigende Bauteil zur Verfügung stehenden Daten erfasst werden, wobei aus den erfassten Daten des zu fertigenden Bauteils und aus den erfassten Fertigungstechnologien mögliche Fertigungsprozessketten für das zu fertigende Bauteil generiert werden, und wobei aus den generierten, möglichen Fertigungsprozessketten eine optimale Fertigungsprozesskette für das Bauteil zumindest auf Basis von monetären Bewertungsdaten und/oder qualitativen Bewertungsdaten ausgewählt wird,
**dadurch gekennzeichnet, dass**

   a) die zur Verfügung stehenden Fertigungstechnologien derart erfasst werden, dass Kernprozesse und den Kernprozessen vorgelagerte und/oder nachgelagerte Vorfolgerprozesse und/oder Nachfolgerprozesse erfasst werden, wobei die Zuordnung der Vorfolgerprozesse und/oder der Nachfolgerprozesse zu Kernprozessen als Prozess-Prozess-Korrelation erfolgt;
   b) die für das zu fertigende Bauteil zur Verfügung stehenden Daten derart hierarchisch erfasst werden, dass für das Bauteil Funktionselemente, die zur Erfüllung der Bauteilfunktion notwendig sind, erfasst werden, und dass weiterhin diese Funktionselemente in Bauteilelemente untergliedert werden, mit Hilfe derer die Funktionselemente konstruktiv realisierbar sind;

c) den erfassten Funktionselementen und/oder Bauteilelementen des zu fertigenden Bauteils zur Realisierung der Funktionselemente und/oder Bauteilelemente verwendbare Kernprozesse als Produkt-Prozess-Korrelation zugeordnet werden, wobei durch mehrfache, iterative Wiederholung dieser Zuordnung die möglichen Fertigungsprozessketten für das zu fertigende Bauteil generiert werden.

2. Verfahren nach Anspruch 1,
   **dadurch gekennzeichnet,**
   **dass** in der Prozess-Prozess-Korrelation gemäß Schritt a) weiterhin Vorgängerpositionen und/oder Nachfolgerpositionen von Vorfolgerprozessen und/oder Nachfolgerprozessen in Bezug auf Kernprozesse erfasst werden.

3. Verfahren nach Anspruch 1 oder 2,
   **dadurch gekennzeichnet,**
   **dass** in der Prozess-Prozess-Korrelation gemäß Schritt a) Vorfolgerprozesse und/oder Nachfolgerprozesse in Bezug auf Kernprozesse unter Verwendung von Korrelationskennwerten wie Muss-Beziehungen und/oder Zumeist-Beziehungen und/oder Kann-Beziehungen uns/oder Selten-Beziehungen erfasst werden.

4. Verfahren nach einem oder mehreren der Ansprüche 1 bis 3,
   **dadurch gekennzeichnet,**
   **dass** bei der Erfassung der zur Verfügung stehenden Kernprozesse, Vorfolgerprozesse und/oder Nachfolgerprozesse gemäß Schritt a) weiterhin Prozessparameter zur quantitativen und/oder qualitativen und/oder monetären Bewertung zumindest der Kernprozesse erfasst werden.

5. Verfahren nach einem oder mehreren der Ansprüche 1 bis 4,
   **dadurch gekennzeichnet,**
   **dass** in Schritt b) die Funktionselemente in Bauteilelemente und Bauteilsubelemente untergliedert werden.

6. Verfahren nach Anspruch 5,
   **dadurch gekennzeichnet,**
   **dass** in Schritt c) Funktionselemente und/oder Bauteilelementen und/oder Bauteilsubelementen des zu fertigenden Bauteils Kernprozesse als Produkt-Prozess-Korrelation zugeordnet werden.

7. Verfahren nach einem oder mehreren der Ansprüche 1 bis 6,
   **dadurch gekennzeichnet,**
   **dass** in der Produkt-Prozess-Korrelation gemäß Schritt c) Kernprozesse den Funktionselementen und/oder Bauteilelementen unter Verwendung von Korrelationskennwerten wie Muss-Beziehungen und/oder Zumeist-Beziehungen und/oder Kann-Beziehungen und/oder Selten-Beziehungen zugeordnet werden.

8. Verfahren nach einem oder mehreren der Ansprüche 1 bis 7,
   **dadurch gekennzeichnet,**
   **dass** weiterhin alle zur Verfügung stehenden Werkstoffe bzw. Materialen erfasst werden.

9. Verfahren nach der Anspruch 8,
   **dadurch gekennzeichnet,**
   **dass** den erfassten Funktionselementen und/oder Bauteilelementen des zu fertigenden Bauteils zur Realisierung der Funktionselemente und/oder Bauteilelemente verwendbare Werkstoffe als Produkt-Material-Korrelation zugeordnet werden.

10. Verfahren nach der Anspruch 9,
    **dadurch gekennzeichnet,**
    **dass** in der Produkt-Material-Korrelation die Funktionselemente und/oder die Bauteilelemente den Werkstoffen unter Verwendung von Korrelationskennwerten wie Muss-Beziehungen und/oder Zumeist-Beziehungen und/oder Kann-Beziehungen und/oder Selten-Beziehungen zugeordnet werden.

11. Verfahren nach einem oder mehreren der Ansprüche 8 bis 10,
    **dadurch gekennzeichnet,**
    **dass** den erfassten Kernprozessen mit denselben bearbeitbare Werkstoffe als Prozess-Material-Korrelation zugeordnet werden.

**12.** Verfahren nach der Anspruch 11,
**dadurch gekennzeichnet,**
**dass** in der Prozess -Material-Korrelation die den Werkstoffen unter Verwendung von Korrelationskennwerten wie Gut-Bearbeitbar-Beziehungen und/oder Eingeschränkt-Bearbeitbar-Beziehungen zugeordnet werden.

**13.** Verfahren nach einem oder mehreren der Ansprüche 1 bis 12,
**dadurch gekennzeichnet,**
**dass** die Prozess-Prozess-Korrelation und die Produkt-Prozess-Korrelation matrixartig erfasst werden.

**14.** Verfahren nach einem oder mehreren der Ansprüche 9 bis 13,
**dadurch gekennzeichnet,**
**dass** die Produkt-Material-Korrelation und die Prozess-Material-Korrelation matrixartig erfasst werden.

Fig. 1

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 289 963 A (* MATSUSHITA ELECTRIC INDUSTRIAL CO., LTD) 6. Dezember 1995 (1995-12-06) * Seite 1, Zeile 7 - Seite 1, Zeile 10 * * Seite 6, Zeile 7 - Seite 6, Zeile 14 * * Seite 9, Zeile 18 - Seite 9, Zeile 21 * * Seite 22, Zeile 18 - Seite 22, Zeile 21 * * Anspruch 3 * * Anspruch 8 * * Abbildung 5B * | 1,2,4-6 | INV. G05B19/418 G06F17/50 G06Q10/00 |
| Y | | 8,11 | |
| A | | 3,7,9, 10,12-14 | |
| | ----- | | |
| Y | US 5 586 039 A (HIRSCH ET AL) 17. Dezember 1996 (1996-12-17) * Spalte 3, Zeile 4 - Spalte 3, Zeile 31 * | 8,11 | |
| A | | 1-7,9, 10,12-14 | |
| | ----- | | RECHERCHIERTE SACHGEBIETE (IPC) |
| A | WO 02/059704 A (APPLIED MATERIALS, INC) 1. August 2002 (2002-08-01) Abstract | 1-14 | G05B G06F G06Q |
| | ----- | | |

Der vorliegende Recherchenbericht wurde für alle Patentansprüche erstellt

| Recherchenort | Abschlußdatum der Recherche | Prüfer |
|---|---|---|
| München | 14. Juli 2006 | Dörre, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03.82 (P04C03)

**EP 1 826 645 A1**

**ANHANG ZUM EUROPÄISCHEN RECHERCHENBERICHT
ÜBER DIE EUROPÄISCHE PATENTANMELDUNG NR.**

EP 06 00 3862

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-07-2006

| Im Recherchenbericht angeführtes Patentdokument | Datum der Veröffentlichung | Mitglied(er) der Patentfamilie | Datum der Veröffentlichung |
|---|---|---|---|
| GB 2289963 A | 06-12-1995 | KEINE | |
| US 5586039 A | 17-12-1996 | KEINE | |
| WO 02059704 A | 01-08-2002 | TW 526530 B | 01-04-2003 |

EPO FORM P0461

Für nähere Einzelheiten zu diesem Anhang : siehe Amtsblatt des Europäischen Patentamts, Nr.12/82

12